Europäisches Patentamt

European Patent Office

Office européen des brevets

(19)

(11) **EP 0 658 249 B1**

(12) **FASCICULE DE BREVET EUROPEEN**

(45) Date de publication et mention
de la délivrance du brevet:
**10.07.1996 Bulletin 1996/28**

(21) Numéro de dépôt: **93919422.1**

(22) Date de dépôt: **06.09.1993**

(51) Int Cl.6: **G01N 27/07**, G01N 27/04,
G01R 27/08

(86) Numéro de dépôt international:
**PCT/FR93/00851**

(87) Numéro de publication internationale:
**WO 94/06001 (17.03.1994 Gazette 1994/07)**

(54) **CELLULE DE MESURE DE LA RESISTIVITE D'UN ECHANTILLON EN BANDE OU EN FIBRE SOUPLE**

WIEDERSTANDSMESSZELLE FUR EINE PROBE IN BANDFORM ODER IN FORM VON WEICHEN FASERN

CELL FOR RESISTIVITY MEASUREMENT OF A STRIP OR ELASTIC FIBRE SAMPLE

(84) Etats contractants désignés:
**BE DE GB IT**

(30) Priorité: **07.09.1992 FR 9210635**

(43) Date de publication de la demande:
**21.06.1995 Bulletin 1995/25**

(73) Titulaire: **COMMISSARIAT A L'ENERGIE
ATOMIQUE
F-75752 Paris Cédex 15 (FR)**

(72) Inventeur: **SEITE, François
F-33600 Pessac (FR)**

(74) Mandataire: **Ilgart, Jean-Christophe et al
c/o Société Brevatome,
25, rue de Ponthieu
F-75008 Paris (FR)**

(56) Documents cités:
**EP-A- 0 337 117**          **US-A- 4 763 064**

- **JOURNAL OF PHYSICS E, vol. 8, no. 1, 1975, pages 13-16, XP002000301 A.M.GEORGE, I.K.GOPALAKRISHNAN: "A four point-probe cell for resistivity measurement at high temperature" cité dans la demande**
- **JOURNAL OF PHYSICS E, vol. 8, no. 1, 1975, pages 13-16, A.M.GEORGE, I.K.GOPALAKRISHNAN: "A four point-probe cell for resistivity measurement at high temperature" cité dans la demande**

**Description**

L'invention se rapporte à une cellule de mesure de la résistivité d'un échantillon en bande ou en fibre souple.

Le document US-A-4 763 064 décrit un appareil pour mesurer les caractéristiques de matériaux solides électrolytes avec essais en température, cet appareil comportant deux plaques minces permettant un contact physique et électrique uniforme avec le matériau à tester, ainsi qu'un ressort pour appliquer une pression sur les plaques et le matériau, et des liaisons électriques. Le document EP-A-0 337 117 décrit un appareil pour mesurer d'une manière constante la résistivité interne d'un tissus.

L'invention utilise la méthode de mesure dite des quatre pointes selon laquelle on injecte un courant par deux fils électriques au contact de l'échantillon et on mesure la tension obtenue à l'extrémité de deux autres fils électriques, également au contact de l'échantillon. Certains problèmes apparaissent cependant quand on veut mesurer à très haute ou très basse température, car il faut alors placer l'ensemble dans une enceinte et les dilatations thermiques peuvent créer des problèmes compliqués si on veut assurer un placement correct des pièces. Dans l'article de A.M. George et I.K. Gopalakrishnan paru dans le "Journal of Physics" E, année 1975, vol. 8, n°1, pp. 13-15, l'enceinte est un étui cylindrique vertical, l'échantillon est posé sur un support au fond de l'enceinte et un mât repoussé par un ressort et coaxial à l'enceinte presse sur l'échantillon un bloc de zircone dans lequel les quatre pointes sont insérées de manière à en dépasser, de sorte qu'elles viennent piquer la surface supérieure de l'échantillon.

On peut cependant toujours craindre des contacts électriques insuffisants, et de plus ce dispositif n'est conçu que pour des mesures dans l'atmosphère ambiante et pour des échantillons rigides. Les problèmes sont compliqués pour des échantillons souples qui peuvent très facilement être déformés ou glisser et sont plus difficiles à maintenir.

C'est pourquoi l'invention concerne un dispositif de cellule de mesure qui garantit que les contacts électriques sont toujours faits dans de bonnes conditions. Elle ressemble à une invention peu antérieure du même inventeur, FR-A-2690743 mais qui avait trait à des échantillons rigides et parallélépipédiques. Sous sa forme la plus générale, la présente invention consiste en une cellule de mesure de la résistivité d'un échantillon en bande ou en fibre souple au moyen de quatre fils électriques comportant chacun une extrémité, caractérisée en ce qu'elle comprend un cylindre et en ce que les extrémités sont recourbées et forment chacune une boucle autour du cylindre, terminée par un crochet et comprenant un repli à une jonction a une autre partie du fil, les crochets étant constitués pour être glissés dans les replis et serrer l'échantillon sur le cylindre.

La manipulation est facilitée si, quand un four est associé à la cellule pour des mesures à haute température (ou un cryostat pour des mesures à basse température), la cellule comprend une enceinte dans laquelle les blocs et l'échantillon sont logés, un dispositif étant prévu pour déplacer l'enceinte en la faisant au moins partiellement entrer dans le four et sortir du four.

Si de plus l'enceinte est essentiellement en forme de cylindre creux disposé verticalement, il est avantageux de suspendre l'enceinte au dispositif pour la déplacer par un soufflet, car un bon centrage peut ainsi être obtenu par rapport au four.

Le cylindre comprend avantageusement quatre gorges de réception des quatre boucles.

On va maintenant décrire l'invention plus en détail à l'aide d'une réalisation de celle-ci, annexée à titre illustratif et non limitatif :

- la figure 1 est une vue d'ensemble du dispositif d'utilisation de la cellule,
- la figure 2 illustre l'enceinte qui contient la cellule,
- et la figure 3 illustre le cylindre et les boucles.

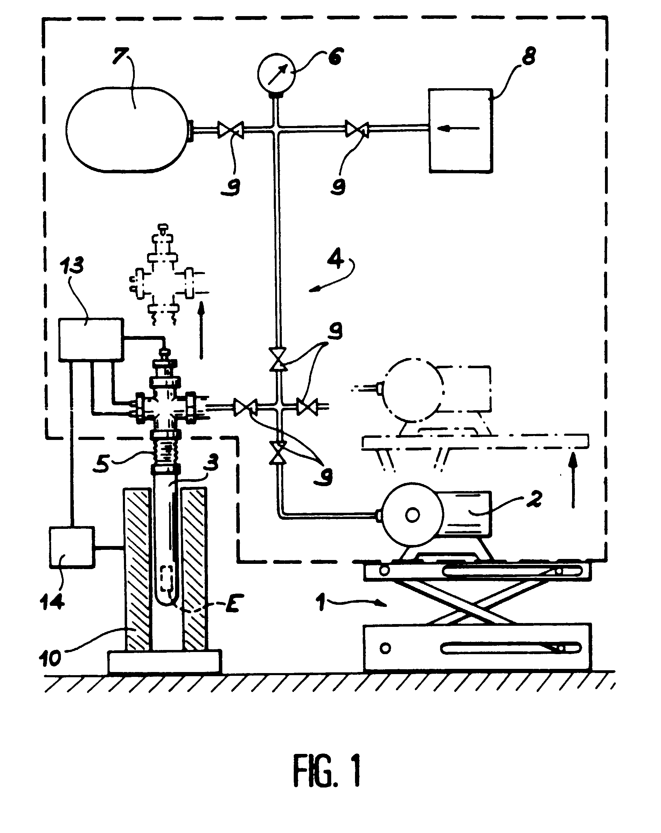

On se reporte d'abord à la figure 1.

Le système de mesure et d'essai comprend, outre la cellule proprement dite, une table élévatrice 1 sur laquelle est fixée une pompe à vide 2, qui est reliée à l'enceinte 3 contenant la cellule par un ensemble de canalisations 4 et par un soufflet d'acier inoxydable 5. Les canalisations 4 aboutissent également à un manomètre 6, à un ballon 7 pour maintenir la pression constante dans l'enceinte 3 et à une source d'argon 8. Des vannes 9 disposées sur les canalisations 4 permettent d'établir les connexions souhaitées, que ce soit pour aspirer, pour insuffler de l'argon, pour modifier la pression ou pour rétablir l'atmosphère normale.

L'enceinte 3 est un cylindre vertical dont le fond est fermé et qui peut être plus ou moins enfoncé dans un four 10 cylindrique par suite des déplacements verticaux de la table 1, ou au contraire extrait de celui-ci.

La mesure est faite par des fils électriques 12 partiellement engagés dans l'enceinte 3 et reliés à une chaîne de mesure 13 qui peut comprendre en particulier un ordinateur de commande, une armoire d'appareils de mesure et des moyens de sorties graphiques. Des moyens de commande 14 du four 10 (boîte de commande et enregistreur de température) sont également prévus.

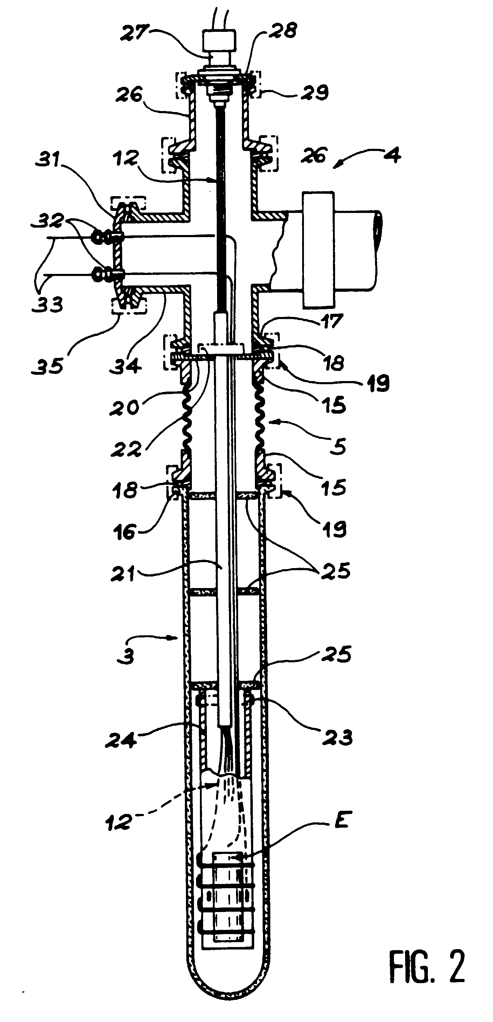

L'étanchéité est sauvegardée (figure 2) grâce à deux brides 15 situées aux extrémités du soufflet 5 et qui coopèrent avec une bride 16 située au sommet de l'enceinte 3 et une bride 17 située au bout de l'ensemble de canalisations 4 pour comprimer des joints d'étanchéité circulaires 18. Des colliers 19 formés de deux parties articulées et munis de surfaces internes coniques complémentaires de surfaces externes coniques des brides 15, 16 et 17 assurent le serrage. Une rondelle de support 20 est intercalée entre les brides 15 et 17 afin de servir d'appui à un tube 21 dans lequel les fils 12 sont engagés sur une partie de leur longueur. Le tube 21 est contenu au centre de l'enceinte 3 et s'étend verticalement. Une clavette 22 est posée sur la rondelle 20 et engagée à travers un perçage du tube 21 pour empêcher celui-ci de tomber. Une clavette 23 est engagée de même dans un perçage inférieur du tube 21 et permet d'y suspendre un cylindre 24 porteur de l'échantillon. L'enceinte est cloisonnée en compartiments par des barrières d'isolation thermique 25 parallèles entre elles et réparties entre le fond de l'enceinte 3 et sa sortie dans le soufflet 5.

L'ensemble de canalisations 4 comporte un appendice 26 où les fils électriques 12 empruntent des passages étanches 27 vissés à une fausse bride 28, bridée à l'appendice 26 par un collier 29.

Une fausse bride 31 est de même prévue sur un autre appendice 34 de l'ensemble de canalisations 4. Il porte des traversées de cloisons 32 pour permettre à des fils 33 reliés à la chaîne de mesure 13 de passer dans l'enceinte 3 sans compromettre l'étanchéité de cette dernière. Les fils 33 aboutissent à des thermocouples qui mesurent la température dans différents endroits de l'enceinte 3. Un collier 35 maintient la fausse bride 31 en place.

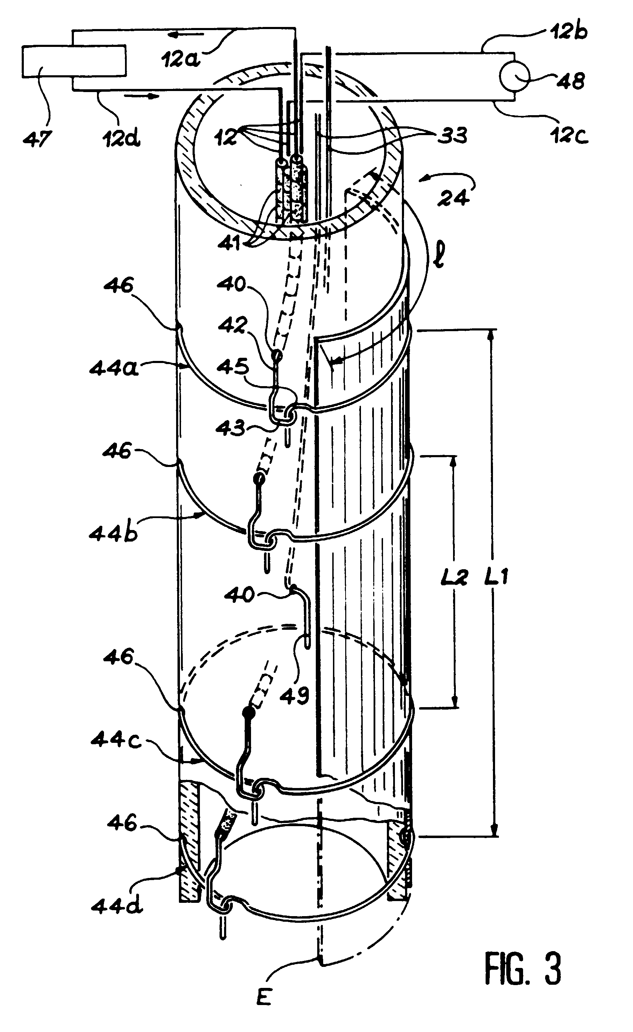

On va maintenant passer au commentaire de la figure 3. Le cylindre 24 est creux et les fils 12 s'étendent partiellement à travers sa partie supérieure avant de ressortir du cylindre 24 par des trous 40 qui traversent sa paroi à des niveaux différents. Les parties des fils 12 qui sont contenues dans le cylindre 24, de même que celles qui sont situées au-dessus et qui sont contenues dans l'enceinte 3 et dans le réseau de canalisations 4, sont entourés de rondelles isolantes 41 qui interdisent les courts- circuits, mais les parties des fils 12 situées hors du cylindre 24 sont dénudées. Ces parties comprennent à partir du trou 40 une portion libre 42 courte et qui s'étend sur une génératrice du cylindre 24, une portion en repli 43, une portion en boucle 44 disposée sur une circonférence du cylindre 24 et une portion en crochet 45. Il est possible de glisser les crochets 45 dans les replis 43 pour que les boucles 44 soient sensiblement au diamètre du cylindre 24 et permettent de serrer un échantillon E constitué d'un fragment de bande souple sur le cylindre 24. Il est avantageux que le cylindre 24 soit creusé de quatre gorges 46, dans chacune desquelles une boucle 44 pénètre, car le serrage de l'échantillon E est meilleur et la hauteur des boucles 44 est parfaitement définie.

On peut distinguer quatre boucles 44a à 44d étagées et parallèles dont chacune comprime l'échantillon E par une même face et sur une largeur 1. Une longueur L1 de l'échantillon E sépare les deux boucles extrêmes 44, et une longueur L2 les deux boucles médianes 44b et 44c. Si l'échantillon E est homogène, sa résistivité ρ peut facilement être calculée si on branche un générateur 47 de courant continu aux extrémités des fils extrêmes 12a et 12d et un voltmètre 48 aux extrémités des autres fils 12b et 12c. Cette résistivité ρ est en effet égale à RS/L2, où R désigne la résistance de l'échantillon E entre les boucles médianes 44b et 44c ; on peut obtenir cette résistance par le calcul du rapport U/I, où U et I désignent la tension mesurée par le voltmètre 48 et l'intensité du courant fourni par le générateur 47. S désigne la section de la bande constituant l'échantillon E et est égale à l.e, où e désigne l'épaisseur de la bande.

On obtient donc

$$\rho = \frac{U}{I} \cdot \frac{e.\,1}{L2}$$

et dans le cas particulier où 1 = L2, ce qui donne de bons résultats en pratique,

$$\rho = \frac{U}{I} \cdot e$$

Pour obtenir des résultats satisfaisants, il faut que L1 soit au minimum égal à deux fois L2.

Les fils 33 passent également dans le cylindre 24 et en sortent par d'autres trous 40 pour se terminer par une extrémité 48 située près de l'échantillon E, dont la température exacte peut ainsi être parfaitement mesurée par des thermocouples reliés à l'autre extrémité des fils 33.

L'échantillon E en forme de bande peut également être remplacé par un échantillon en forme de fibre placé de la même façon. La résistance est égale comme précédemment à U/I, et il suffit de la diviser par la longueur L2 pour obtenir la résistance linéique de l'échantillon. La résistivité est égale à $\frac{U}{I}.\frac{S}{L2}$, où S désigne la section de la fibre.

La souplesse du dispositif, et en particulier la suspension de l'enceinte 3 par le soufflet 5 et celle du cylindre 24 par le tube 21 permettent d'enfourner sans risque l'enceinte 3 et de ne jamais introduire de coincement. Les dilatations thermiques ne sont pas susceptibles de produire des déformations qui provoqueraient des défauts de connexion électrique ou des déplacements des éléments de la cellule de mesure qui disqualifieraient l'essai.

Les matériaux des pièces sont choisis de façon adaptée aux diverses contraintes rencontrées et en particulier à la température prévue pour l'essai et aux réactions chimiques qui risquent de se produire entre les différentes pièces. C'est ainsi que les fils 12 ne doivent pas réagir avec l'échantillon E. Le cylindre 24 est de préférence en matériau non poreux afin que toutes les impuretés conductrices qui pourraient être déposées sur eux puissent être nettoyées facilement, et l'enceinte 3 est également, de préférence, non poreuse afin de ne pas retenir du gaz d'une nature qui n'est pas souhaitée et qui se dégagerait quand le vide serait créé.

Ce cylindre 24 peut être en alumine ou nitrure de bore, et l'enceinte 3 en alumine ou en quartz.

Le four 10 pourrait être remplacé par un cryostat de même forme sans altération des avantages de l'invention.

## Revendications

1. Cellule de mesure de la résistivité d'un échantillon (E) en bande ou en fibre souple au moyen de quatre fils électriques (12) comportant chacun une extrémité, caractérisée en ce qu'elle comprend un cylindre (24) et en ce que les extrémités des fils sont recourbées et forment chacune une boucle (44) autour du cylindre (24), terminée par un crochet (45) et comprenant un repli (43) à une jonction à une autre partie du fil (12) les crochets étant constitués pour être glissés dans les replis et serrer l'échantillon (E) sur le cylindre (24).

2. Cellule selon la revendication 1, à laquelle est associé un four (10) et comprenant une enceinte (3) dans laquelle le cylindre et l'échantillon sont logés, caractérisée par un dispositif (1) pour déplacer l'enceinte en la faisant au moins partiellement entrer dans le four et sortir du four.

3. Cellule selon la revendication 2, où l'enceinte est essentiellement en forme de cylindre creux disposé verticalement, caractérisée en ce que l'enceinte est suspendue au dispositif pour la déplacer par un soufflet (5).

4. Cellule selon la revendication 3, caractérisée par un moyen, inclus dans l'enceinte, de suspension (21, 24) des blocs.

5. Cellule selon la revendication 1, caractérisée par des barrières thermiques (25) cloisonnant l'enceinte en compartiments entre les blocs et une sortie de l'enceinte.

6. Cellule selon la revendication 1, caractérisée en ce que l'enceinte est étanche et pourvue de moyens (2, 4, 8) de remplacement de l'atmosphère qu'elle contient ou d'établissement du vide.

7. Cellule selon la revendication 1, caractérisée en ce que le cylindre comprend quatre gorges (46) de réception des quatre boucles.

## Patentansprüche

1. Widerstandsmeßzelle für eine Probe (E) in Bandform oder in Form von weichen Fasern durch vier elektrische Drähte (12), von denen jeder ein Ende aufweist

   **dadurch gekennzeichnet,**
   daß sie einen Zylinder (24) umfaßt und daß die Enden der Drähte gebogen sind und jedes eine Schleife (44) um den Zylinder (24) herum bildet, abgeschlossen durch einen Haken (45) und eine Umbiegung (43) an einer Verbindungsstelle mit einem anderen Teil des Drahts (12) umfassend, wobei die Haken ausgebildet sind, um in die Umbiegungen gesteckt zu werden und die Probe (E) auf dem Zylinder (24) festzuklemmen.

2. Zelle nach Anspruch 1, der ein Ofen (10) zugeordnet ist und die einen Behälter (3) umfaßt, in dem der Zylinder und die Probe untergebracht sind, gekennzeichnet durch eine Vorrichtung (1), um den Behälter zu verschieben, indem man ihn wenigstens teilweise in den Ofen hineinsteckt und aus dem Ofen herauszieht.

3. Zelle nach Anspruch 2, wobei der Behälter im wesentlichen die Form eines vertikal angeordneten Hohlzylinders aufweist, dadurch gekennzeichnet, daß der Behälter an der Vorrichtung aufgehängt ist, um ihn mittels eines Faltenbalgs (5) zu verschieben.

4. Zelle nach Anspruch 3, gekennzeichnet durch eine in den Behälter eingeschlossene Einrichtung zum Aufhängen (21, 24) der Blöcke.

5. Zelle nach Anspruch 1, gekennzeichnet durch Wärmesperren (25), die den Behälter zwischen den Blöcken und einem Ausgang des Behälters in Abteile unterteilen.

6. Zelle nach Anspruch 1, dadurch gekennzeichnet, daß der Behälter dicht ist und versehen mit Einrichtungen (2, 4, 8) zum Austauschen der Atmosphäre, die er enthält, oder zum Herstellen des Vakuums.

7. Zelle nach Anspruch 1, dadurch gekennzeichnet, daß der Zylinder vier Rillen (46) zur Aufnahme der vier Schleifen umfaßt.

## Claims

1. Cell for measuring the resistivity of a sample (E) in band or flexible fibre form, by means of four electrical wires (12) each having an end, characterized in that it comprises a cylinder (24) and in that the ends of the wires are curved and each form a loop (44) which passes around the cylinder (24), which loop (44) ends in a hook (45) and comprises a fold (43) at a junction with another part of the wire (12), the hooks being designed to be slid into the folds and to clamp the sample (E) on the cylinder (24).

2. Cell according to Claim 1, having an associated furnace (10) and comprising an enclosure (3) in which the cylinder and the sample are housed, characterized by a device (1) for moving the enclosure while making it at least partially enter the furnace and exit the furnace.

3. Cell according to Claim 2, in which the enclosure is essentially in the form of a vertically arranged hollow cylinder, characterized in that the enclosure is suspended from the device for moving it by a bellows (5).

4. Cell according to Claim 3, characterized by a means (21, 24), included in the enclosure, for suspending the units.

5. Cell according to Claim 1, characterized by thermal barriers (25) partitioning the enclosure into compartments between the units and an exit of the enclosure.

6. Cell according to Claim 1, characterized in that the enclosure is leaktight and is provided with means (2, 4, 8) for replacing the atmosphere which it contains or for establishing a vacuum.

7. Cell according to Claim 1, characterized in that the cylinder comprises four grooves (46) for receiving the four loops.

FIG. 1

FIG. 2

FIG. 3